# EUROPÄISCHE PATENTSCHRIFT

(11) **EP 0 949 949 B1**
(45) Veröffentlichungstag und Bekanntmachung des Hinweises auf die Patenterteilung: **13.06.2001**
(21) Anmeldenummer: 97945663.9
(22) Anmeldetag: 03.12.1997
(51) Int. Cl.: B01D 29/03, B01D 29/54, B01D 29/64, B29C 47/68

(54) **FILTERVORRICHTUNG FÜR VERUNREINIGUNGEN ENTHALTENDE FLÜSSIGKEITEN**
DEVICE FOR FILTERING FLUIDS CONTAINING IMPURITIES
DISPOSITIF POUR FILTRER DES FLUIDES CONTENANT DES IMPURETES

(30) Priorität: 05.12.1996 AT 213296
(43) Veröffentlichungstag der Anmeldung: 20.10.1999
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dr. Dipl.-Ing.
(86) Internationale Anmeldenummer: AT9700268
(87) Internationale Veröffentlichungsnummer: WO9824532

(56) Entgegenhaltungen:
- CH-A- 600 928
- DE-A- 3 937 930
- DE-U- 8 914 072
- DE-U- 9 110 961

## Beschreibung

Die Erfindung bezieht sich auf eine Filtervorrichtung für Verunreinigungen, insbesondere Festkörper, enthaltende Flüssigkeiten, insbesondere plastifiziertes, thermoplastisches Kunststoffmaterial, mit einem Gehäuse, in welchem zumindest ein feststehendes, im wesentlichen ebenes Filter angeordnet ist, dem die zu reinigende Flüssigkeit im Bereiche seines Umfanges durch zumindest einen Zustromkanal zugeführt wird und von welchem die gereinigte Flüssigkeit durch zumindest einen Abstromkanal aus dem Gehäuse abgeleitet wird, wobei zumindest ein mit einer Schabkante an die zustromseitige Oberfläche des Filters angedrücktes Schaberelement vorgesehen ist, das an einem Schaberträger beweglich befestigt ist, der durch einen Antrieb um eine im wesentlichen normal zur zustromseitigen Oberfläche des Filters angeordnete Achse drehbar ist, wobei das Schaberelement die an dieser Oberfläche anhaftenden Verunreinigungen abstreift und gegen das Zentrum des Filters fördert, von wo die Verunreinigungen durch zumindest einen von dort ausgehenden, aus dem Gehäuse herausführenden Abfuhrkanal mittels zumindest einer Schnecke abtransportiert werden.

Eine solche Filtervorrichtung ist bekannt (WO 94/17981). Bei dieser bekannten Vorrichtung sind die Schabkanten jeweils von mehreren, voneinander getrennten Schaberelementen gebildet, die entweder durch Federn an das Filter angedrückt sind oder durch den Druck der zugeführten, zu filtrierenden Flüssigkeit. Im letzteren Fall sind die Schaberelemente mittels Bolzen, die normal zur Filteroberfläche gerichtet sind, entlang der Bolzenachse beweglich am Schaberträger befestigt und so beschaffen, daß der auf das Schaberelement durch die zugeführte Flüssigkeit in Richtung zum Filter wirkende Druck größer ist als der in der entgegengesetzten Richtung wirkende Druck. Beide Konstruktionsvarianten haben jedoch den Nachteil, daß ein Feststoffteilchen sich zwischen dem Filter und dem Schaberelement so festsetzen kann, daß es von der Schabkante des Schaberelementes nicht erfaßt wird. Dieses Feststoffteilchen hält dann das Schaberelement in Abstand von der zu reinigenden Filteroberfläche, so daß das betreffende Schaberelement unwirksam wird. Dies bewirkt nicht nur eine Verringerung der Reinigung der zustromseitigen Filterfläche, sondern häufig auch einen zusätzlichen Verschleiß an dieser Oberfläche durch ständig im Kreis geführte, häufig scharfkantige Feststoffteilchen.

Die Erfindung setzt sich zur Aufgabe, diesen Nachteil der bekannten Vorrichtung auf einfache Weise zu vermeiden. Die Erfindung löst diese Aufgabe dadurch, daß zumindest ein Schaberelement um eine Achse schwenkbar am Schaberträger befestigt ist und von dieser Achse in Umlaufrichtung des Schaberträgers schräg zum Filter zu gerichtet absteht, wobei die Schabkante des Schaberelementes beim Umlauf des Schaberelementes durch den Gegendruck der zu reinigenden Flüssigkeit gegen das Filter gedrückt ist. Das betreffende Schaberelement ist daher frei pendelnd am Schaberträger aufgehängt, steht jedoch von diesem in Umlaufrichtung des Schaberträgers vor. Sobald der Umlauf des Schaberträgers um seine Drehachse beginnt, bewirkt der von der zu reinigenden Flüssigkeit auf das Schaberelement ausgeübte Gegendruck, daß dieses Schaberelement gegen die zu reinigende Filterfläche gedrückt wird und somit eine wirksame Schabwirkung ausübt. Tote Winkel, in denen sich Feststoffteilchen festsetzen können, welche diese Wirkung des Schaberelementes beeinträchtigen, können bei sinnvoller Konstruktion nicht auftreten, so daß die einwandfreie Funktion des Schaberelementes ständig erhalten bleibt.

Gemäß einer bevorzugten Ausführungsform der Erfindung hat das Schaberelement eine geradlinige Schabkante, die parallel zur Schwenkachse liegt, wobei das äußere Ende der Schabkante relativ zu einer von der Drehachse des Schaberträgers ausgehenden, zum inneren Ende der Schabkante führenden Radialen, in Drehrichtung des Schaberträgers gesehen, voranläuft. Durch diese Anordnung der Schwenkachse des Schaberelementes und seiner Schabkante ergibt sich beim Umlauf des Schaberträgers automatisch eine Förderung der von der zu reinigenden Filteroberfläche abgeschabten Verunreinigungen gegen das Zentrum des Filters zu, wo diese Verunreinigungen durch zumindest eine Schnecke erfaßt und durch den Abfuhrkanal aus dem Gehäuse herausgeführt werden.

In der Regel sind mehrere Schaberelemente am Schaberträger in der beschriebenen Weise schwenkbar gelagert, welche Schaberelemente sternförmig in bezug auf die Drehachse des Schaberträgers angeordnet sind. Es können auch jeweils zwei oder mehr Schaberelemente entlang eines Armes eines solchen Sternes so angeordnet sein, daß ihre Schabkanten gegenseitig Fortsetzungen bilden, etwa entlang gekrümmter Bahnen, so wie dies bei den Schaberelementen der eingangs erwähnten bekannten Vorrichtung der Fall ist. In der Regel genügt jedoch die Anordnung eines einzigen Schaberelementes pro erwähnten Arm des Sternes. Um in einem solchen Fall eine verläßliche Förderung der vom Schaberelement abgeschabten Verunreinigungen gegen das Zentrum des Filterelementes zu sichern, kann gemäß einer Weiterbildung der Erfindung anschließend an das innere Ende der Schabkante des Schaberelementes ein gegen den Mittenbereich des Schaberträgers gerichteter Vorsprung am Schaberträger vorgesehen sein, welcher die Verunreinigungen gegen das Zentrum des Filters zum Abfuhrkanal fördert. Vorzugsweise ist im Rahmen der Erfindung dieser Vorsprung eine Leiste, die mit ihrer Längsrichtung in Längsrichtung der Schabkante des Schaberelementes liegt.

Gemäß einer zweckmäßigen Weiterbildung der Erfindung trägt das Schaberelement einen die Schabkante bildenden, vorzugsweise auswechselbaren Verschleißkörper. Durch Auswechslung des Verschleißkörpers bei auftretendem Verschleiß lassen sich wieder wirksame Verhältnisse herstellen.

Eine besonders günstige Ausführungsform der Erfindung besteht darin, daß der Zustromkanal zu einem Raum zwischen zwei nebeneinander, vorzugsweise parallel zueinander, angeordneten Filtern führt und der Schaberträger für beide Filter gemeinsam ist und auf beiden Seiten den Filtern zugeordnete Schaberelemente, vorzugsweise paarweise, trägt, deren jedes an seinem dem Filter zugewendeten Ende einen die Schabkante bildenden Bauteil, vorzugsweise eine Verschleißkörper, trägt, der zwei Schabkanten aufweist, wobei die Schaberelemente der einen Seite des Schaberträgers gegen die Schaberelemente der anderen Seite des Schaberträgers austauschbar sind. Dadurch läßt sich eine Verdoppelung der Lebensdauer jedes Schaberelementes bzw. seines Verschleißkörpers erzielen.

Eine weitere Verbesserung der Filterwirkung kann gemäß einer Weiterbildung der Erfindung dadurch erzielt werden, daß zumindest ein Zustromkanal in einen Verteilerraum mündet, der das oder die Filter über zumindest einen Großteil des Umfanges umgibt und über mehrere Öffnungen in einer Zwischenwand mit der Zustromseite des Filters bzw. mit dem zwischen den beiden Filtern liegenden Raum in Verbindung steht. Der Verteilerraum gewährleistet eine gleichmäßige Anströmung der Filterfläche über zumindest einen Großteil ihres Umfanges, gegebenenfalls sogar den gesamten Umfang. Die Öffnungen in der Zwischenwand bilden ein Vorfilter, welches grobe Verunreinigungsteilchen zurückhält, z.B. Metallklammern, Steinchen usw. Dadurch wird das eigentliche Filter entlastet und geschont.

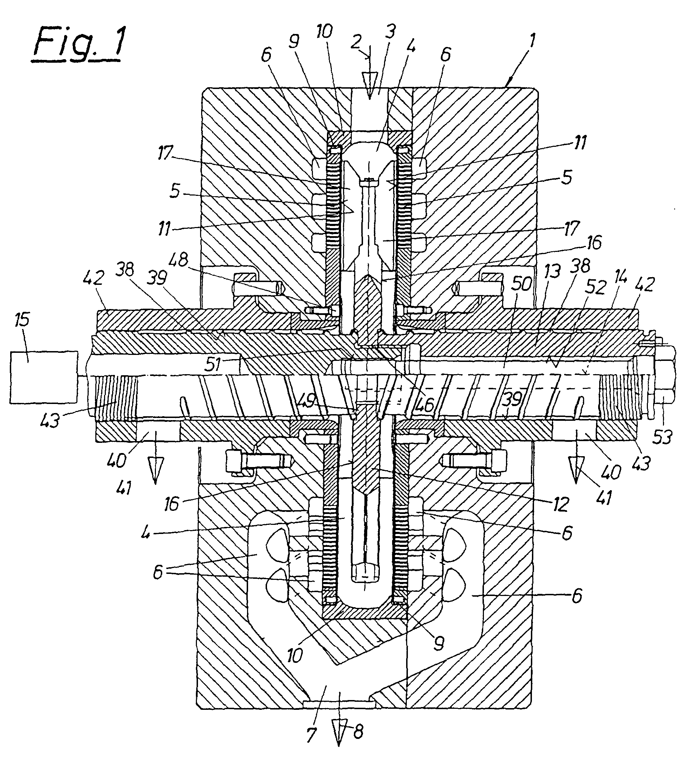

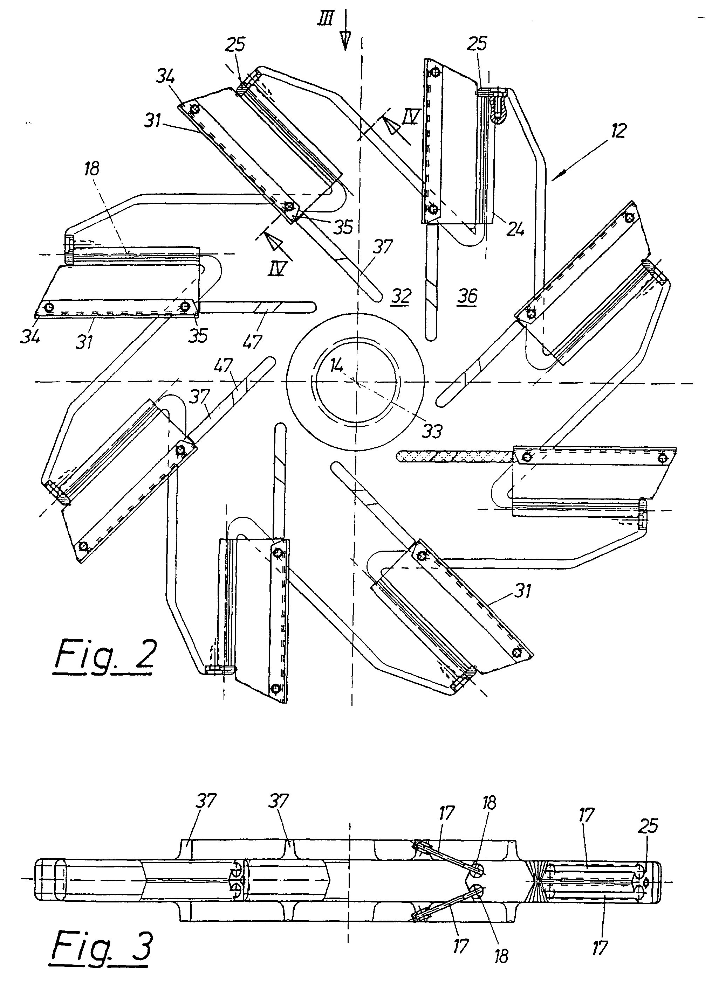

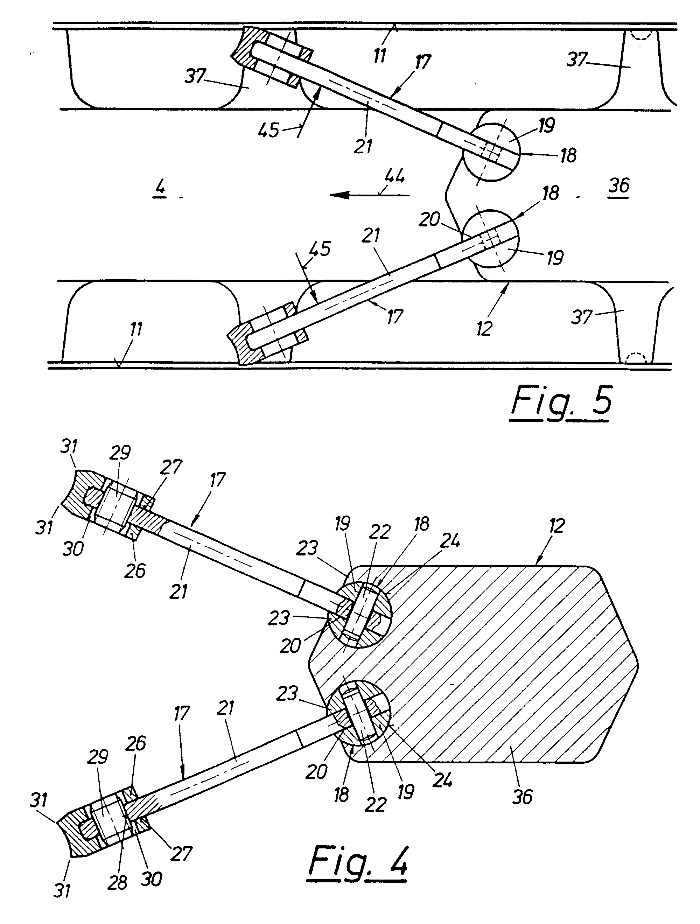

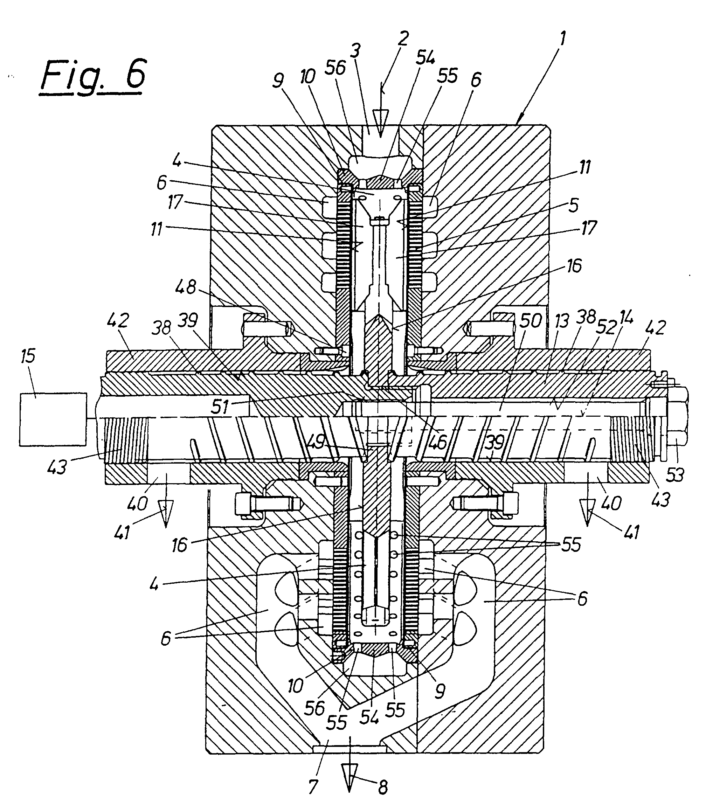

Weitere Kennzeichen und Vorteile der Erfindung ergeben sich aus der Beschreibung von Ausführungsbeispielen des Erfindungsgegenstandes, welche in der Zeichnung schematisch dargestellt sind. Fig. 1 zeigt einen Vertikalschnitt durch die Filtervorrichtung. Fig. 2 zeigt den Schaberträger in Ansicht in Richtung der Achse seines Umlaufes. Fig. 3 ist eine Draufsicht zu Fig. 2 in Richtung des Pfeiles Ill. Fig. 4 zeigt in größerem Maßstab ein Detail im Schnitt entlang der Linie IV - IV der Fig. 2. Fig. 5 zeigt das Zusammenwirken zweier Schaberelemente mit den benachbarten Filteroberflächen. Fig.6 zeigt eine Ausführungsvariante zu Fig.1.

Die Filtervorrichtung gemäß Fig. 1 hat ein Gehäuse 1, in das die mit Feststoffteilchen verunreinigte Flüssigkeit, insbesondere verschmutztes, thermoplastisches, plastifiziertes Kunststoffmaterial, in Richtung des Pfeiles 2 in einen Zustromkanal 3 eingeleitet wird. Dieser Zustromkanal 3 mündet in einen ringförmigen Raum 4, welcher zwischen zwei zueinander parallel angeordneten, feststehenden und im wesentlichen ebenenen Filtern 5 angeordnet ist. Vorzugsweise weist jedes dieser Filter 5 eine mit Feinlöchern, die vorzugsweise elektronenstrahl- oder lasergebohrt sind, versehene eigentliche Filterplatte auf, die durch eine Stützplatte auf der Abstromseite abgestützt ist, deren Durchgangsbohrungen einen wesentlich größeren Durchmesser aufweisen als die Feinlöcher der eigentlichen Filterplatte. Dies ermöglicht hohe Drücke, etwa 300 bar und mehr, in der zugeführten, zu reinigenden Flüssigkeit. Die Filter 5 bzw. die sie aufbauenden Platten sind eben, können jedoch auch geringfügig von der ebenen Form abweichen, insbesondere geringfügig kegelförmig ausgebildet sein. Es können mehrere Zuströmkanäle 3 in den Raum 4 zwischen den beiden Filtern 5 münden.

Auf der Abstromseite jedes Filters 5 liegen Sammelräume 6, die in zumindest einen Abstromkanal 7 münden, durch den die gereinigte Flüssigkeit in Richtung des Pfeiles 8 aus dem Gehäuse 1 abströmt. Es können ebenfalls mehrere Abstromkanäle 7 vorgesehen sein. Jeder Abstromkanal 7 liegt ebenso wie jeder Zustromkanal 3 im Bereich des äußeren Umfanges der beiden Ringscheiben, welche die beiden Filter 5 bilden.

Die beiden Filter 5 sind im Gehäuse 1 unverdrehbar gehalten und an ihrem äußeren Umfang 9 abgedichtet in ringförmigen Halterungen 10 so gehalten, daß die gegebenenfalls infolge des hohen Druckes des zu filtrierenden Materiales auftretenden Durchbiegungen der Filter 5 aufgenommen werden. Zugleich bilden diese Halterungen 10 Abdichtungen für den Raum 4, so daß kein zu filtrierendes Material unter Umgehung des Filters 5 in den Abstromkanal 7 gelangen kann.

Die Verunreinigungen in der zugeführten Flüssigkeit, welche die feinen Öffnungen des Filters 5 nicht passieren können, sammeln sich an der zustromseitigen Oberfläche 11 des Filters 5 an und werden von dort abgeschabt. Hiezu ist zwischen den beiden Filtern 5 ein scheibenförmiger Schaberträger 12 angeordnet, der in seinem Zentrum mit einer Welle 13 drehschlüssig verbunden ist, deren Achse 14 normal auf die Ebene jedes der Filter 5 steht und zugleich auch die Drehachse für den Schaberträger 12 bildet. Diese Welle 13 ist mit einem nur schematisch dargestellten Antrieb 15 zur kontinuierlichen Drehung um ihre Achse 14 verbunden. Der Schaberträger 12 trägt an jeder seiner beiden, jeweils einem der Filter 5 zugewendeten Oberflächen 16 mehrere voneinander entlang des Umfanges des Schaberträgers 12 in gleichen Abständen voneinander angeordnete Schaberelemente 17. Jedes dieser Schaberelemente 17 ist am Schaberträger 12 um eine Achse 18 (Fig. 2,4,5) schwenkbar gelagert, die im dargestellten Ausführungsbeispiel von einem Rundprofil 19 gebildet ist, das aus zwei spiegelbildlich zueinander angeordneten Halbrundstäben zusammengesetzt ist, wobei in den zwischen den beiden Halbrundstäben befindlichen Zwischenraum 20 eine den Grundkörper des Schaberelementes 17 bildende Platte 21 eingelegt und mittels quer zur Ebene der Platte 21 verlaufender Bolzen 22 locker mit den beiden Halbrundstäben verbunden, jedoch gegen Abziehen von diesen gesichert ist. Statt der beiden Halbrundstäbe kann auch ein mit einem Schlitz versehener Vollrundstab treten, in dessen Schlitz die Platte 21 eingesetzt und durch die Bolzen 22 oder Schrauben gegen Abziehen gesichert ist. Der Schwenkbereich jedes Schaberelementes 17 um die Achse des Rundprofiles 19 ist dadurch begrenzt, daß das Rundprofil 19 über den größten Teil seines Umfanges vom Material des Schaberträgers 12 abgedeckt ist, wobei die das Rundprofil 19 umfassenden Bereiche 23 des Schaberträgers 12 Begrenzungsanschläge für den Schwenkbereich der Platte 21 bilden. Jedes Rundprofil 19 ist gegen Herausfallen aus dem Schaberträger 12 gesichert, z.B. dadurch, daß es in eine Sackbohrung 24 (Fig. 2) eingesteckt ist, wobei das offene Ende dieser Bohrung durch einen am Schaberträger 12 angeschraubten Verschlußkörper 25 verschlossen ist.

Jede Platte 21 des Schaberelementes 17 trägt am freien Ende einen Verschleißkörper 26, der mit der Platte 17 auswechselbar verbunden ist. Hiezu hat jeder in Form einer Leiste ausgebildete Verschleißkörper 26 einen Längsschlitz 27, mit welchem er auf die Platte 21 des Schaberelementes 17 aufgesteckt ist. Eine in eine Querbohrung 28 der Platte 21 eingeschraubte Schraube 29 sichert den Verschleißkörper 26 gegen Abziehen von der Platte 21. Die Schraube 29 sitzt mit Spiel in einer einen größeren Durchmesser aufweisenden Bohrung 30, so daß der Verschleißkörper 26 etwas Bewegungsmöglichkeit in Richtung der Ebene der Platte 21 hat. Der Verschlußkörper 26 kann daher Durchbiegungen des Filders 5 folgen. Außerdem werden dadurch Ungenauigkeiten in der Herstellung aufgenommen, zumal die in der Regel aus Hartmetall bestehenden Verschleißkörper 26 eine Nachbearbeitung zumeist nur schwer erlauben. Jeder Verschleißkörper 26 trägt zwei Schabkanten 31, deren jeweils eine die Verunreinigungen von der zustromseitigen Oberfläche 11 des benachbarten Filters 5 abkratzt und gegen den Bereich 32 des Zentrums des Schaberträgers 12 fördert. Dies wird einerseits dadurch bewirkt, daß der Schaberträger 12 um die Achse 14 durch den Antrieb 15 gedreht wird, anderseits dadurch, daß die Schabkanten 31 so gerichtet sind, daß ihre Längsrichtung an der Achse 14 (identisch mit dem Zentrum 33 des Schaberträgers 12 bzw. der beiden Filter 5) vorbeiführt, derart, daß das äußere Ende 34 jeder Schabkante 31 relativ zu einer von der Achse 14 des Schaberträgers 12 ausgehenden Radialen voranläuft, welche durch das innere Ende 35 der Schabkante 31 führt. Im Anschluß an jeden Verschleißkörper 26 trägt die den Grundkörper 36 des Schaberträgers 12 bildende Scheibe jeweils einen Vorsprung 37, der gleichsam eine Fortsetzung der Schaberkanten 31 bildet und die abgeschabten Verunreinigungen gegen den mittigen Bereich 32 des Schaberträgers 12 fördert. In diesem Bereich werden die Verunreinigungen durch zwei von den beiden Seiten des Schaberträgers ausgehenden, nach einander entgegengesetzten Richtungen führenden Schnecken 38 erfaßt, deren Schneckengänge in die Oberfläche der Welle 13 eingearbeitet sind und die in Abfuhrkanälen 39 gelagert sind, durch welche die Verunreinigungen von den Schnecken 38 zu zwei Öffnungen 40 transportiert werden, durch welche die Verunreinigungen in Richtung der Pfeile 41 aus dem jeweiligen Gehäuse 42 der Schnecke 38 austreten. Am jeweils äußeren Ende jeder Welle 13 befindet sich im Anschluß an die Öffnung 40 ein Gewinde 43 mit zur Richtung der Steigung der Schnecke 38 entgegengesetzter Steigung, welches Gewinde 43 als Dichtung wirkt.

Im dargestellten Ausführungsbeispiel ist jeder Vorsprung 37 als Leiste ausgebildet, deren Längsrichtung parallel ist zur Längsrichtung der geradlinigen Schabkante 31. Die Vorsprünge 37 können jedoch auch als Füllstücke beliebiger Form ausgebildet sein, z.B. dreieckförmig oder bogenförmig, wobei die Bogenform bzw. die Abwinkelung dieses den Vorsprung bildenden Füllstückes so gewählt ist, daß sich die erwähnte Förderung der Verunreinigungen gegen das Zentrum des Schaberträgers 12 zu ergibt. Ebenso müssen die Schabkanten 31 nicht geradlinig verlaufen, auch sie können bogenförmig oder abgewinkelt ausgebildet sein.

Im Betrieb ergibt sich beim Umlauf des Schaberträgers 12 in Richtung des Pfeiles 44 (Fig.5) um seine Achse 14 eine Andrückung der Verschleißkörper 26 mit der außen liegenden Schabkante 31 gegen die zustromseitige Oberfläche 11 des Filters 5 (siehe auch Fig. 5). Diese Andrückung wird bewirkt durch den Gegendruck in Richtung der Pfeile 45, welchen die im Raum 4 befindliche, zu filtrierende Flüssigkeit bei der Vorschubbewegung der Schaberelemente 17 auf die Platten 21 ausübt. Zu dieser Andrückung sind somit keine Federn erforderlich, sodaß die Vorrichtung unempfindlich gegen Federbruch ist. Diese Andrückung ist auch im wesentlichen unabhängig vom Druck der im Raum 4 befindlichen, zu filtrierenden Flüssigkeit, sodaß die Vorrichtung verwendbar ist für jedweden Druck im zu filtrierenden Mateiral. Wohl aber ist die erwähnte Andrückung der Schaberelemente 17 an die Filteroberfläche 11 abhängig von der Geschwindigkeit der Umlaufbewegung des Schaberträgers 12 im Raum 4 und von der Zähigkeit der zu filtrierenden Flüssigkeit, sodaß die Möglichkeit besteht, durch Wahl dieser Umlaufgeschwindigkeit den gewünschten Anpressungsdruck der Schaberelemente 17 auf die Filteroberfläche 11 einzustellen bzw. sich an die Zähigkeit der vorliegenden, zu filtrierenden Flüssigkeit anzupassen. Eine Blockierung der Wirkung der Schaberelemente 17 durch zwischen diese und die Filteroberfläche 11 eingeklemmte Feststoffteilchen kann nicht auftreten.

Die Parallelschaltung zweier Filter 5 hat nicht nur den Vorteil einer Vergrößerung der aktiven Filterfläche und somit eine Steigerung des Durchsatzes durch die Filtervorrichtung, sondern auch den Vorteil, daß durch einfachen Austausch der Schaberelemente 17, welche dem einen Filter 5 zugeordnet sind, gegen die dem anderen Filter 5 zugeordneten Schaberelemente ein Wechsel der jeweils aktiven Schabkante 31 jedes Schaberelementes 17 durchführbar ist. Hiezu brauchen nur die Verschraubungen der Verschlußkörper 25 gelöst und die Schaberelemente 17 mit ihren Rundprofilen 19 aus den zugeordneten Bohrungen 24 herausgezogen und in der beschriebenen Weise gegeneinander ausgetauscht zu werden, worauf nach erneuter Einsetzung der Rundprofile 19 in ihre Bohrungen 24 und Sicherung mittels der Verschlußkörper 25 die Vorrichtung wieder betriebsbereit ist.

Zur Erleichterung der Montage und der Demontage ist das Gehäuse 1 zweiteilig ausgebildet und auch die Welle 13 zweiteilig ausgeführt, wobei die beiden Wellenteile mittels einer formschlüssigen Verbindung 46 (Fig.1), z.B. eines Sechskantes oder einer Verzahnung, mit einerander drehschlüssig verbunden sind, so daß sie gemeinsam vom Antrieb 15 aus zur Umlaufbewegung angetrieben werden können. In eine Absetzung 49 der beiden Abschnitte der Welle 13 ist der Schaberträger 12 eingesetzt und auf die gleiche Weise drehschlüssig verbunden wie die beiden Wellenteile. Der nötige Zusammenhalt wird durch eine Schraube 50 gesichert, deren Außengewinde in ein Innengewinde 51 des linken Wellenteiles eingeschraubt ist und die eine Bohrung 52 des rechten Wellenteiles durchsetzt und sich mit ihrem Kopf 53 an diesem Wellenteil abstützt.

Die Leisten 37 können gegebenenfalls Freistellungen 47 (Fig.2) aufweisen, um mehr Platz für Schrauben 48 zu lassen, mit denen die Filter 5 am Gehäuse 1 angeschraubt sind.

Die Ausführungsform nach Fig.6 unterscheidet sich von jener nach Fig.1 dadurch, daß die Halterung 10 für die beiden Filter 5 als ringförmige Zwischenwand 54 ausgebildet ist, die entlang ihres Umfanges von einer Vielzahl von Öffnungen 55 durchsetzt ist. Diese Zwischenwand 54 begrenzt zusammen mit dem Gehäuse 1 einen ringförmigen Verteilerraum 56, der mit dem Zustromkanal 3 oder den Zuströmkanälen in Verbindung steht und welcher die Filter 5 entlang ihres äußeren Umfanges umgibt und über die Öffnungen 55 mit dem Raum 4 in Verbindung steht, so daß eine gleichmäßige Anströmung der zustromseitigen Oberflächen 11 der Filter 5 gesichert ist. Zugleich bildet die Zwischenwand 54 mit ihren Öffnungen 55 ein Vorfilter, welches grobe Verunreinigungen zurückhält, welche über die Zuströmkanäle 3 von der zu reinigenden Flüssigkeit in den Verteilerraum 56 eingebracht werden.

## Patentansprüche

1. Filtervorrichtung für Verunreinigungen, insbesondere Festkörper, enthaltende Flüssigkeiten, insbesondere plastifiziertes thermoplastisches Kunststoffmaterial, mit einem Gehäuse (1), in welchem zumindest ein feststehendes, im wesentlichen ebenes Filter (5) angeordnet ist, dem die zu reinigende Flüssigkeit im Bereich seines Umfanges durch zumindest einen Zustromkanal (3) zugeführt wird und von welchem die gereinigte Flüssigkeit durch zumindest einen Abstromkanal (7) aus dem Gehäuse abgeleitet wird, wobei zumindest ein mit einer Schabkante an die zustromseitige Oberfläche des Filters angedrücktes Schaberelement (17) vorgesehen ist, das an einem Schaberträger (12) beweglich befestigt ist, der durch einen Antrieb um eine im wesentlichen normal zur zustromseitigen Oberfläche des Filters angeordnete Achse drehbar ist, und wobei das Schaberelement die an dieser Oberfläche anhaftenden Verunreinigungen abstreift und gegen das Zentrum des Filters fördert, von wo die Verunreinigungen durch zumindest einen von dort ausgehenden, aus dem Gehäuse herausführenden Abfuhrkanal mittels zumindest einer Schnecke abtransportiert werden, dadurch gekennzeichnet, daß zumindest ein Schaberelement (17) um eine Achse (18) schwenkbar am Schaberträger (12) befestigt ist und von dieser Achse (18) in Umlaufrichtung (Pfeil 44) des Schaberträgers (12) schräg zum Filter (5) zu gerichtet absteht, wobei die Schabkante (31) des Schaberelementes (17) beim Umlauf des Schaberelementes (17) durch den Gegendruck der zu reinigenden Flüssigkeit gegen das Filter (5) gedrückt ist.

2. Filtervorrichtung nach Anspruch 1, dadurch gekennzeichnet, daß das Schaberelement (17) zumindest eine geradlinige Schabkante (31) aufweist, die parallel zur Schwenkachse (18) liegt, wobei das äußere Ende (34) der Schabkante (31) relativ zu einer von der Drehachse (14) des Schaberträgers (12) ausgehenden, zum inneren Ende (35) der Schabkante (31) führenden Radialen, in Drehrichtung des Schaberträgers (12) gesehen, voranläuft.

3. Filtervorrichtung nach Anspruch 1 oder 2, dadurch gekennzeichnet, daß anschließend an das innere Ende (35) der Schabkante (31) ein gegen den Mittenbereich (32) des Schaberträgers (12) gerichteter Vorsprung (37) am Schaberträger (12) vorgesehen ist, welcher die Verunreinigungen gegen das Zentrum des Filters (5) zum Abfuhrkanal (39) fördert.

4. Filtervorrichtung nach Anspruch 3, dadurch gekennzeichnet, daß der Vorsprung (37) eine Leiste (37) ist, die mit ihrer Längsrichtung in Längsrichtung der Schabkante (31) des Schaberelementes (17) liegt.

5. Filtervorrichtung nach einem der Ansprüche 1 bis 4, dadurch gekennzeichnet, daß das Schaberelement (17) eine Platte (21) aufweist, die an ihrem Rand mit einem Rundprofil (19) verbunden ist oder dieses aufweist, welches in eine entsprechende Bohrung (24) des Schaberträgers (12) eingesetzt ist und so ein Schwenklager für die Platte (21) bildet.

6. Filtervorrichtung nach Anspruch 5, dadurch gekennzeichnet, daß die das Rundprofil (19) umfassenden Bereiche (23) des Schaberträgers (12) Begrenzungen für den Schwenkbereich des Schaberelementes (17) bilden.

7. Filtervorrichtung nach Anspruch 5 oder 6, dadurch gekennzeichnet, daß das Rundprofil (19) von einem Rundstab oder zwei Halbrundstäben gebildet ist, der (die) mittels quer verlaufender Schrauben oder Bolzen mit der Platte (21) verbunden ist (sind) und gegen Herausfallen aus der Bohrung (24) gesichert ist (sind), vorzugsweise durch einen das Bohrungsende verschließenden, am Schaberträger (12) angeschraubten Verschlußkörper (25).

8. Filtervorrichtung nach einem der Ansprüche 1 bis 7, dadurch gekennzeichnet, daß das Schaberelement (17) einen die Schabkante (31) bildenden, vorzugsweise auswechselbaren, Verschleißkörper (26) trägt.

9. Filtervorrichtung nach einem der Ansprüche 1 bis 8, dadurch gekennzeichnet, daß der Zustromkanal (3) zu einem Raum (4) zwischen zwei nebeneinander, vorzugsweise parallel zueinander, angeordneten Filtern (5) führt und der Schaberträger (12) für beide Filter (5) gemeinsam ist und auf beiden Seiten den Filtern (5) zugeordnete Schaberelemente (17), vorzugsweise paarweise, trägt, deren jedes an seinem dem Filter (5) zugewandten Ende einen die Schabkante (31) bildenden Bauteil, vorzugsweise einen Verschleißkörper (26), trägt, der zwei Schabkanten (31) aufweist, wobei die Schaberelemente der einen Seite des Schaberträgers (12) gegen die Schaberelemente (17) der anderen Seite des Schaberträgers (12) austauschbar sind.

10. Filtervorrichtung nach einem der Ansprüche 1 bis 9, dadurch gekennzeichnet, daß zumindest ein Zustromkanal (3) in einen Verteilerraum (56) mündet, der das oder die Filter (5) über zumindest einen Großteil des Umfanges umgibt und über mehrere Öffnungen (55) in einer Zwischenwand (54) mit der zustromseitigen Oberfläche (11) des Filters (5) bzw. mit dem zwischen den beiden Filtern (5) liegenden Raum (4) in Verbindung steht.

11. Filtervorrichtung nach Anspruch 10, dadurch gekennzeichnet, daß die Öffnungen (55) ein Vorfilter für grobe Verunreinigungen bilden.

12. Filtervorrichtung nach Anspruch 10 oder 11, dadurch gekennzeichnet, daß die ringförmige Zwischenwand (54) eine Halterung (10) für die Filter (5) bildet.

## Claims

1. A filtering device for fluids, in particular plasticized thermoplastic plastics material, containing impurities, in particular solids, with a casing (1), in which at least one stationary. substantially flat filter (5) is arranged, to which the fluid to be cleaned is supplied in the region of its periphery through at least one feed duct (3) and from which the cleaned fluid is removed from the casing through at least one outflow duct (7), wherein at least one scraper member (17) is provided which is pressed with a scraping edge against the inflow surface of the filter and which is secured in a movable manner to a scraper carrier (12) rotatable by a drive about an axis arranged substantially at a right angle to the inflow surface of the filter, and wherein the scraper member wipes off the impurities adhering to this surface and conveys them towards the centre of the filter, from where the impurities are conveyed away by means of at least one worm through at least one removal duct starting from there and leading out of the casing, **characterized in that** at least one scraper member (17) is secured to the scraper carrier (12) so as to be pivotable about an axis (18) and projects directed obliquely to the filter (5) from the said axis (18) in the peripheral direction (arrow 44) of the scraper carrier (12), wherein the scraping edge (31) of the scraper member (17) is pressed against the filter (5) by the counter pressure of the fluid to be cleaned during the rotation of the scraper member (17).

2. A filtering device according to Claim 1, **characterized in that** the scraper member (17) has at least one straight scraping edge (31) arranged parallel to the pivot axis (18), wherein the outer end (34) of the scraping edge (31) is upstream, as viewed in the direction of rotation of the scraper carrier (12), relative to a radial line starting from the axis of rotation (14) of the scraper carrier (12) and leading to the inner end (35) of the scraping edge (31).

3. A filtering device according to Claim 1 or 2, **characterized in that** adjoining the inner end (35) of the scraping edge (31) a projection (37) directed towards the middle region (32) of the scraper carrier (12) is provided on the scraper carrier (12), and conveys the impurities towards the centre of the filter (5) to the removal duct (39).

4. A filtering device according to Claim 3, **characterized in that** the projection (37) is a strip (37) which is arranged with the longitudinal direction thereof in the longitudinal direction of the scraping edge (31) of the scraper member (17).

5. A filtering device according to one of Claims 1 to 4, **characterized in that** the scraper member (17) has a plate (21) which is connected at its edge to a round section (19) or is provided therewith, and is inserted into a corresponding bore (24) in the scraper carrier (12) and thus forms a pivot bearing for the plate (21).

6. A filtering device according to Claim 5, **characterized in that** the regions (23) of the scraper carrier (12) surrounding the round section (19) form boundaries for the pivoting region of the scraper member (17).

7. A filtering device according to Claim 5 or 6, **characterized in that** the round section (19) is formed by a round rod or two half-round rods connected to the plate (21) by means of transversely extending bolts or pins and prevented from falling out of the bore (24), preferably by a closure member (25) closing the end of the bore and screwed to the scraper carrier (12).

8. A filtering device according to one of Claims 1 to 7, **characterized in that** the scraper member (17) carries a wearing member (26) forming the scraping edge (31) and preferably replaceable.

9. A filtering device according to one of Claims 1 to 8, **characterized in that** the feed duct (3) leads to a space (4) between two filters (5) arranged adjacent to each other, and preferably parallel to each other, and the scraper carrier (12) is common to both filters (5) and carries on both sides scraper members (17), preferably in pairs, which are associated with the filters (5) and each of which carries at the end thereof facing the filter (5) a component, preferably a wearing member (26), forming the scraping edge (31) and having two scraping edges (31), wherein the scraper members on one side of the scraper carrier (12) can be replaced by the scraper members (17) on the other side of the scraper carrier (12).

10. A filtering device according to one of Claims 1 to 9, **characterized in that** at least one feed duct (3) opens into a distributor chamber (56) which surrounds the filter or filters (5) over at least the greater part of the periphery and is connected by way of a plurality of openings (55) in an intermediate wall (54) to the inflow surface (11) of the filter (5) or to the space (4) situated between the two filters (5).

11. A filtering device according to Claim 10, **characterized in that** the openings (55) form a preliminary filter for coarse impurities.

12. A filtering device according to Claim 10 or 11, **characterized in that** the annular intermediate wall (54) forms a retaining means (10) for the filters (5).

## Revendications

1. Dispositif pour filtrer des fluides, en particulier des matières thermoplastiques plastifiées, contenant des impuretés, en particulier des corps solides, avec un bâti (1), dans lequel est agencé au moins un filtre (5) fixe sensiblement plan, à la périphérie duquel le liquide à purifier est introduit via au moins un canal d'alimentation (3) et hors duquel le fluide purifié est évacué vers l'extérieur du bâti via au moins un canal d'évacuation (7), ledit dispositif comportant au moins un élément racleur (17) avec une arête de raclage pressée contre la surface côté alimentation du filtre, ledit élément racleur étant fixé avec capacité de mouvement à un support de racloirs (12) apte à être entraîné en rotation par un dispositif d'entraînement autour d'un axe sensiblement normal à la surface côté alimentation du filtre, et l'élément racleur raclant les impuretés adhérant à ladite surface en les refoulant vers le centre du filtre, d'où elles sont évacuées au moyen d'au moins une vis sans fin via au moins un canal d'évacuation reliant ledit filtre à l'extérieur du bâti, caractérisé en ce qu'au moins un élément racleur (17) est fixé au support de racloirs (12) avec capacité de pivotement autour d'un axe (18) et dépasse de cet axe (18) en étant orienté en biais par rapport au filtre (5) dans le sens de rotation (flèche 44) du support de racloirs (12), l'arête de raclage (31) de l'élément racleur (17) étant pressée contre le filtre (5) lors de la rotation de l'élément racleur (17) sous l'effet de la contre-pression du fluide à purifier.

2. Dispositif de filtrage selon la revendication 1, caractérisé en ce que l'élément racleur (17) présente au moins une arête de raclage (31) rectiligne, parallèle à l'axe de pivotement (18), l'extrémité externe (34) de l'arête de raclage (31) étant en avance par rapport à une droite radiale passant par l'axe de rotation (14) du support de racloirs (12) et par l'extrémité interne (35) de l'arête de raclage (31), vu dans le sens de rotation du support de racloirs (12).

3. Dispositif de filtrage selon la revendication 1 ou 2, caractérisé en ce qu'il est prévu, sur le support de racloirs (12), dans le prolongement de l'extrémité interne (35) de l'arête de raclage (31), un ressaut (37) orienté vers la région centrale (32) du support de racloirs (12), qui refoule les impuretés vers le centre du filtre (5) en direction du canal d'évacuation (39).

4. Dispositif de filtrage selon la revendication 3, caractérisé en ce que le ressaut (37) est une baguette (37), dont l'axe longitudinal est parallèle à l'axe longitudinal de l'arête de raclage (31) de l'élément racleur (17).

5. Dispositif de filtrage selon l'une des revendications 1 à 4, caractérisé en ce que l'élément racleur (17) présente une plaque (21), qui est liée par son bord à un profil rond (19) ou présente ledit profil, lequel est inséré dans un perçage (24) correspondant du support de racloirs (12) et forme ainsi un palier d'articulation pour la plaque (21).

6. Dispositif de filtrage selon la revendication 5, caractérisé en ce que les régions (23) du support de racloirs (12) enserrant le profil rond (19) délimitent la course de pivotement de l'élément racleur (17).

7. Dispositif de filtrage selon la revendication 5 ou 6, caractérisé en ce que le profil rond (19) est formé d'une barre ronde ou de deux barres semi-circulaires, reliée(s) au moyen de vis ou de boulons transversaux à la plaque (21) et bloqué(es) dans le perçage (24), de préférence par un obturateur (25) vissé au support de racloirs (12) et obturant l'extrémité du perçage.

8. Dispositif de filtrage selon l'une des revendications 1 à 7, caractérisé en ce que l'élément racleur (17) supporte une pièce d'usure (26) de préférence remplaçable, formant l'arête de raclage (31).

9. Dispositif de filtrage selon l'une des revendications 1 à 8, caractérisé en ce que le canal d'amenée (3) débouche dans un espace (4) entre deux filtres (5) agencés côte à côte et de préférence parallèles entre eux et en ce que le support de racloirs (12) est commun aux deux filtres (5) et supporte sur ses deux faces des éléments racleurs (17) associés aux filtres (5), de préférence par paires, chaque élément racleur supportant, à son extrémité orientée vers le filtre (5), un composant formant l'arête de raclage (31), de préférence une pièce d'usure (26), qui présente deux arêtes de raclage (31), les éléments racleurs d'une face du support de racloirs (12) pouvant être interchangés avec les éléments racleurs (17) de l'autre face du support de racloirs (12).

10. Dispositif de filtrage selon l'une des revendications 1 à 9, caractérisé en ce qu'au moins un canal d'alimentation (3) débouche dans un espace de distribution (56), qui entoure le ou les filtre(s) (5) sur au moins une grande partie de la périphérie et communique par plusieurs orifices (55) ménagés dans une paroi (54) avec la face (11) côté alimentation du filtre (5) ou avec l'espace (4) situé entre les deux filtres (5).

11. Dispositif de filtrage selon la revendication 10, caractérisé en ce que les orifices (55) font office de pré-filtre pour les impuretés grossières.

12. Dispositif de filtrage selon la revendication 10 ou 11, caractérisé en ce que la paroi circulaire (54) forme un support (10) pour les filtres (5).
